# EUROPEAN PATENT APPLICATION

(11) **EP 3 258 400 A1**
(43) Date of publication of application: **20.12.2017**
(21) Application number: 16305725.0
(22) Date of filing: 14.06.2016
(51) Int. Cl.: G06F 17/50, B61L 19/00, B61L 27/00

(54) **METHOD AND DESIGNING SYSTEM FOR DESIGNING AN INTERLOCKING CONTROL SYSTEM**

(71) Applicant: ALSTOM Transport Technologies, 93400 Saint-Ouen (FR)
(72) Inventor: GENUALDO, Michele, 70043 MONOPOLI (IT); STANGHELLINI, Sanzio, 40013 CASTEL MAGGIORE (IT); BARTOLOTTI, Daniele, 40050 MONTE SAN PIETRO (IT)
(74) Representative: Lavoix

(57) **Abstract**

The invention concerns a method for designing an interlocking control system comprising hardware and software executed by the hardware, the method comprising a step (1) of, by means of a hardware designer module (1202), automatically designing the hardware, thereby generating hardware configuration data, the automatic designing being based on predetermined designing rules and specific input data, a successive step (2) of, by means of a software generator module (1203), automatically generating the software executed on the designed hardware, the generation of the software being based on predetermined specific architecture rules the hardware configuration data, and the input data. According to the invention, the method further comprises the steps of (3) automatically providing the input data to the hardware designer module (1202) by means of a suite manager module (1100), and (4) automatically providing the input data and the hardware configuration data to the software generator module (1203) by means of the suite manager module.

## Description

The present invention concerns a method for designing an interlocking control system and a designing system for designing the same.

The present invention relates to the domain of circulation management of vehicles using a transportation network, such as a railroad transportation network or the like. In a manner known per se, the circulation management is achieved through field interlocking equipment of an interlocking system, often called "yard equipment" and/or "wayside equipment" and/or "trackside equipment", which are designed to perform specific train circulation-related operations. This equipment may comprise signaling devices and/or railroad switches and/or track circuits, or the like. This field equipment may be controlled remotely by operators through an interlocking control system, in a semi-automatic or automatic manner, based on a software architecture executed by computing means of the control system. The interlocking control system includes a communication network through which the system is interfaced with the field equipment. An example of such an interlocking control system is disclosed in FR-B1-2 739 824.

CN-A-102 975 743 discloses a method for automatically arranging trackside equipment on the field.

However, for each transportation network to be equipped with an interlocking system, the interlocking control system has to be designed through a process involving several teams of high skilled designers, some of which are dedicated to designing the hardware by means of specific designing software, some others being dedicated to building the software architecture that will be implemented in computer means of the designed hardware. The communication network may also be designed by a separate team of designers, for interfacing the transportation network way side equipment with the developed hardware. This requires organizational means for coordinating the work of the different teams involved in the project, which can often be dispatched on different geographical sites. Furthermore, the development of the interlocking control system has to be executed in compliance with the requirements of a specific client and/or specific transportation networks, using their own specific technical languages, codes and operational rules.

Consequently, one of the goals of the invention is to provide a method for designing an interlocking control system which aims to simplify the designing of interlocking control system, by reducing the needs for organizational skills for the designing.

The object of the invention is a method according to claim 1.

Thanks to the invention, the steps of designing the hardware and generating the software are managed by a suite manager module, which provides automatic communication between the hardware designer module and the software generator module, thereby reducing the needs for organizational skills and/or management skills for performing the steps the designing. In addition, the invention allows designing the interlocking control system advantageously on the same platform, or even by means of only one computer terminal, since the necessary data is automatically transmitted from one module to the other.

Further optional advantageous features of the invention are defined in claims 2 to 13.

Another object of the invention is a designing system according to claim 14.

The invention will now be explained in reference to the annexed drawings, as an illustrative example. In the annexed drawings:
- figure 1 is a schematic architectural view of a designing system according to the invention, also depicting a diagrammatic view of a method according to the invention; and
- figure 2 is a schematic architectural view of an interlocking control system that may be designed by means of the designing system and method of figure 1, the interlocking control system being interfaced with interlocking equipment of a transportation network.

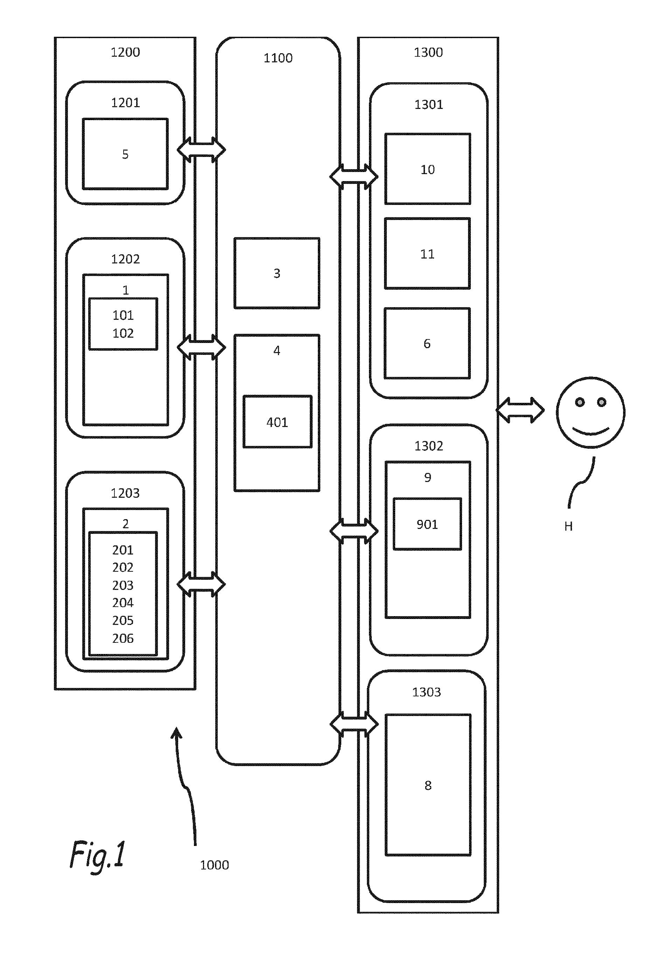

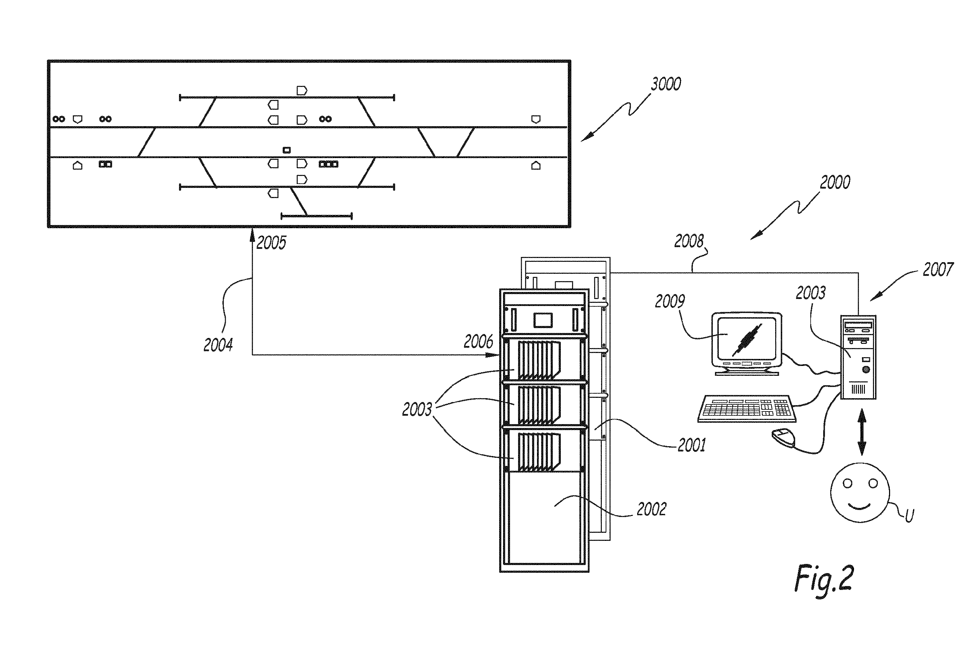

The designing system 1000 of figure 1 is preferably a computer-implemented software suite, with a graphic interface through which an operator, namely a person, may interact with the system 1000 for designing the interlocking control system 2000 depicted on figure 2. The designing system 1000 is configured to execute a method comprising the steps and sub-steps defined herein-below and schematically illustrated on figure 1.

The designing system 1000 comprises a suite manager module 1100 and several calculation modules 1200. Preferably, in normal usage of the system 1000, these modules 1100 and 1200 are automatic, the system 1000 being provided with authentication means of the operators H interacting with the system, so that only some operators H are allowed interacting with the modules 1100 and 1200 through authentication. Preferably, only higher skilled operators H may be provided with the rights to access modules 1100 and 1200 through the authentication means, while these modules 1100 and 1200 remain inaccessible to lower skilled operators H, not being provided with the necessary access rights.

The system 1000 also comprises several interactive modules 1300 through which any operator H, of higher or lower skill, may interact with the designing system 1000. Authentication means of the system 1000 may still restrict the access of the designing system 1000 to authorized personnel only.

Preferably, the designing system 1000 is to be implemented on a single computer unit, such as a personal computer, on which an operator H may interact. Alternatively, the designing system 1000 is be implemented on a system comprising several computer units, connected together with an appropriate communication system, so that data may be transmitted from one computer to another through the communication system, for communication between the several modules 1100, 1200 and 1300. For example, each computer may implement one or more of the modules 1200 and 1300, while the suite manager module 1100 is implemented on a server connected to the computers through the communication system. Many other configurations are possible.

In any case, one or more operators H may be interacting with the designing system 1000, each operator interacting with one of the interactive modules 1300. Preferably, the computer units are grouped on a common working platform on which the operators are physically working.

As depicted on figure 2, the interlocking control system 2000 to be designed by the designing system 1000 of figure 1, is configured to be interfaced with a plurality of elements belonging to interlocking equipment 3000 of a transportation network, preferably a railroad network, a subway network, a tramway network, or the like. The interlocking equipment comprises elements such as signaling devices and/or railroad switches and/or track circuits, or the like, provided physically on the field where the transportation network is implemented.

The designing system 1000 is configured to automatically design, or at least to assist operators H in designing, several interlocking control system similar to the system 2000 depicted on figure 2. The interlocking control systems 2000 that may be designed by the designing system 1000 are modular, and obtained by combination of hardware units and software units defined by predetermined building rules and architectural rules. As a result, designing one control system 2000 is preferably mostly obtained by modular combination, namely by combining predetermined or prefabricated elements.

The interlocking control system 2000 to be designed comprises hardware, including one or more control units 2001 and 2002, for controlling the interlocking equipment 3000. Each control unit 2001 and 2002 is preferably in the form of a cubicle or cabinet, each comprising computing means 2003. The computing means 2003 are intended for controlling the interlocking equipment 3000 remotely, through a communication network 2004 of the hardware. In other words, the communication network 2004 is intended for interfacing the control units 2001 and 2002 with the interlocking equipment 3000. Practically, the control units 2001 and 2002 may be station-based, the communication network 2004 being configured to link the units 2001 and 2002 to the interlocking equipment arranged trackside. For this purpose, the communication network 2004 may comprise a network of cables connected to each element of the interlocking equipment and to one or several of the control units 2001 and 2002.

For controlling the interlocking equipment 3000, the computing means 2003 of the control units 2001 and 2002 execute software, in other words a system of one or more computer programs. A first part of the software comprises a control program and a logic unit, executed by the computing means 2003 of the control units 2001 and 2002. The control program and the logic unit are to be executed in combination with each other for sending control signals 2005 to the interlocking equipment 3000 and for receiving feedback signals 2006 from the interlocking equipment 3000, through the communication network 2004.

The hardware of the interlocking control system 2000 also comprises a human-machine interface 2007, including further computing means 2003 able to execute a second part of the software. The interface 2007 is locally or remotely connected to the control units 2001 and 2002, through appropriate communication means 2008, such as a wire or a wireless communication network. The human-machine interface 2007 can be implemented in the form of one or more personal computers, for enabling one or more users U, namely one or more people, to control the interlocking equipment 3000 through the control units 2001 and 2002, by interacting with the interface 2007. Thus, the interlocking control system 2000 allows automatic, semi-automatic or manual controls of the interlocking equipment by the users U. A part of the software executed by the interlocking control system constitutes a graphic interface to be displayed on one or more monitors 2009 of the human-machine interface 2007. The graphic interface interacts with the control units 2001 and 2002 for displaying state and/or status of the interlocking equipment 3000 to the user U, in real time. The users U may act on the graphic interface for controlling the interlocking equipment 3000, through the control units 2001 and 2002.

As depicted on figure 1, for designing the interlocking control system 2000 intended to be interfaced to the interlocking equipment 3000 of a given transportation network, an operator H firstly interacts with an input data editor module 1301 of the designing system 1000. The input data editor module 1301 is an interactive module 1300 of the designing system 1000. The input data editor module 1301 interacts with a data translator module 1201 of the designing system 1000, belonging to the calculation modules 1200. This interaction is preferably achieved by means of the suite manager module 1100, but may be achieved by direct communication between the data editor module 1301 and the translator module 1201.

The data translator module 1201 is configured to execute a step 5 of automatically translating, in other words importing, specific data provided by the operator H to the editor module 1301, during a step 11. The specific data is translated into input data during step 5.

The specific data is specific to the interlocking equipment 3000 to which the interlocking control system 2000 is intended to be interfaced with. Namely, the specific data comprises the essential features of the interlocking equipment 3000 and of the transportation network, which are necessary for designing the interlocking control system 2000. For example, the specific data comprises one or more of the following elements: graphic track layout of the transportation network, control table of the transportation network, functional scheme of the transportation network, operational rules of the transportation network. The graphic track layout is specifying the implementation of tracks and interlocking equipment of the transportation network by means of a symbolic and schematic map-like illustration. A control table is a tabular representation specifying the routes on which the passage of the train is allowed within the transportation network, the states and the actions of the related interlocking equipment being specified in association with each route.

The specific data is advantageously in a specific technical language interpretable by a human, and in particular by the operator H or the user U. For example, the graphic track layout includes graphic symbols illustrating schematically the transportation network in the interlocking equipment, these symbols being specific to this particular transportation network, or to the operating entity of this particular transportation network. Thus, the operator H provides translation rules during a step 10, through the input data editor module 1301. The translation rules are specific to the transportation network for which the control system 2000 is intended to be interfaced with, or specific to at least a part of several transportation networks that an operating entity may handle through interlocking control systems similar to the system 2000 to be designed in the present case. For example the translation rules comprise a list of symbols associated to their technical meaning, in a generic language interpretable by further modules 1200 and 1300 of the designing system 1000 described below. The input data editor module 1301 comprises an appropriate interface for the operator H to provide the module 1301 with these translation rules. Afterwards, the step 5 of automatic translation is executed by the data translator module 1201 based on these translation rules.

After step 5, the input data editor module 1301 allows performing a step 6 of modifying and/or validating the translated input data, so that the operator H may check and modify if necessary the translated input data. For this purpose, at least a part of the input data may be translated back into the specific language and submitted to the operator H. Then, the operator H may compare the specific data with this input data that has been translated back. Step 6 may also comprise further sub-steps executed automatically or semi-automatically with help of the operator H. Preferably, an automatic verifier module, not illustrated, belonging to the calculation modules 1200, may perform automatic tests of the control table based on operation rules or signaling rules. For example, the control table can be verified through coherence algorithms, or techniques based on diversity or reconstruction.

Preferably, the interactive modules 1300 are automatically configured to interact with operators H in the specific technical language thanks to the step 5 of automatic translation. Thus, the operators H do not need to be skilled so as to understand the generic language, but only need to be skilled in the specific technical language. Thus, the operator H may be of lower skill in computer science, while advantageously of higher skill in interlocking equipment and transportation network.

The calculation modules 1200 of the designing system 1000 comprise a hardware designer module 1202 and a software generator module 1203 which are configured to interpret the generic language translated by the automatic data translator module 1201.

After step 6, the suite manager module 1100 executes a step 3 of automatically providing the validated input data to the hardware designer module 1202 and to the software generator module 1203.

Then, the hardware designer module 1202 automatically performs a step 1 of automatically designing the hardware of the interlocking control system 2000. The hardware designer module 1202 includes a computer implemented program for enabling this automatic designing, based on predetermined designing rules, or architectural rules, specific for modular interlocking control systems of the type of the control system 2000 to be designed. In particular, the predetermined designing rules comprise a library of available hardware units that may be combined in a modular way for generating the hardware, such as cabinets, racks, relays, wiring units, elementary circuits, or the like. The designing rules also include rules for combining these hardware units with each other. In particular, depending on the input data and thanks to appropriate algorithms, the hardware designer module 1202 chooses which hardware units from the library are necessary for the control system 2000. Thus, in a sub-step 101 of step 1, the hardware designer module 1202 automatically generates a list of hardware units required for the designed hardware, based on the input data, the predetermined designing rules, in particular based on the available hardware units of the library. In a preferable embodiment, in a sub-step 102, the hardware designer module 1202 automatically determines appropriate locations for the hardware units of the list, in the interlocking control system 2000 being designed. The sub-step 102 can be achieved, since the hardware designer module 1202 is provided with both the input data and the designing rules, informing the hardware designer module 1202 on how the hardware units may be combined with each other, and allocated relative to each other and on the field.

Thus, hardware configuration data, containing all the data essential to building the hardware part of the interlocking control system 2000, is generated by the module 1202. The hardware configuration data is automatically transmitted to a hardware editor module 1302 belonging to the interactive module 1300 of the designing system 1000. This automatic transmission is preferably executed by means of the suite manager module 1100, but can be achieved by direct communication between the hardware designer module 1202 and the hardware editor module 1302.

The hardware editor module 1302 allows the operator H performing a step 9 of modifying and/or validating the hardware configuration data generated by the hardware designer module 1202. The operator H interacting with the hardware editor module 1302 may be the same or a different operator than the one interacting with the input data editor module 1301. In particular, in a sub-step 901 executed by means of the hardware editor module 1302, the operator H is provided with the list of hardware units for checking whether this list is correct in view of the practical situation and/or of his own knowledge. The sub-step 901 also comprises providing the operator H with data related to the determined allocations. For that purpose, the hardware editor module 1302 may include a computer aided design software able to display a graphic representation of the hardware, and enabling personalization of these allocations and of the list of hardware units by the operator H. Thus, the operator H may modify and/or validate the hardware configuration data by means of the hardware editor module 1302. If necessary, the operator H may modify the hardware configuration data by means of the editor module 1302, for making a finalized version of this data.

The validated or finalized hardware configuration data is then provided to the operator H through the editor module 1302, so that the hardware part of the interlocking control system 2000 may be built and implemented on the field. Preferably, the hardware configuration data is provided to the operator H in the specific technical language, thanks to the translation rules. Thus, the hardware configuration data is compliant to rules and specific technical language of the operating entity.

Then, the suite manager module 1100 performs a step 4 of automatically providing the input data and the validated hardware configuration data to the software generator module 1203. Also, step 4 comprises a sub-step 401 in which the suite manager 1100 also automatically provides the software generator module 1203 with the translation rules, which have been provided to the input data editor module 1301.

In a step 2, the software generator module 1203 automatically generates the software to be executed on the computing means 2003 of the designed hardware. The software is built by the module 1203 based on predetermined architectural rules specific to the type of modular interlocking control systems that the designing system 1000 is configured to design. These predetermined software architectural rules are pre-configured in the designing system 1000. The software architectural rules depend in particular in particular to the library of available hardware unit. For example, the software generator module 1203 is of the type described in WO-A1-03/070537.

During step 2, the software generator 1203 performs a sub-step 202 of automatically generating a list of Boolean variables depending on the received hardware configuration data. The Boolean variables of the list generated in sub-step 202 correspond to the logic state of each element of interlocking equipment 3000 that may be sent by means of feedback signals 2006 through the communication network 2004, and also to the control signals 2005 that may be sent to the equipment through the communication network 2004.

Depending on the list of Boolean variables, on the input data and on the predetermined architectural rules, the software generator module 1203 automatically generates the logic unit. In particular, equations involving the Boolean variables or generated based on interlocking equipment data, operational rules contained in the input data.

Then, the software generator module 1203 automatically generates, through a sub-step 204, the control program that will interact with the logic unit for controlling the interlocking equipment 3000. The control program is generated depending on the hardware configuration data, on the input data and on the aforementioned architectural rules.

Once the logic unit and the control program are generated, an operator H may perform a step 8 of modifying and/or validating the logic unit and the control program generated by the module 1203 through a software editor module 1303, belonging to the interactive modules 1300. The operator H interacting with module 1303 may be the same operator than the one interacting with the other modules 1300, or a specific different operator H. The data relative to the software is transmitted to a specific sub-module of the software editor module 1303, by the suite manager module 1100. The validation of the software through the software editor module 1303 may involve simulation and testing procedures performed by the specific sub-module. The simulation and testing procedures may be executed by means of a simulator of the type described in WO-A1-2004/044788. The software editor module 1303 being displayed to the operator H in the specific technical language, the operator H advantageously does not require advanced skills in computer science. If required, the software may be adapted by the operator H depending on results of these procedures. Some modifications of the software may be executed by an operator with more advanced skills in computer science by means of an advanced editing sub-module of the software editor module 1303, accessible to this advanced operator through an adequate authentication procedure. Preferably, the advanced sub-module is not available to lower skilled operators, who are not provided with the necessary authentication rights.

The suite manager module 1100 then transmits the validated logic unit and control program to the software generator module 1203, which performs a sub-step 205 of compiling the validated logic unit and control program for forming the first part the software, which will be executed by the computing means 2003 of the control unit 2001.

In parallel, the software generator module 1203 automatically generates, in a sub-step 201 included in step 2, the graphic interface to be displayed on the monitor 2009 of the human-machine interface 2007. This graphic interface belongs to a second part of the software, for operating the human-machine interface 2007. The automatic generation of the graphic interface is based on the predetermined architectural rules, which may be personalized to the operating entity of the transportation network. In particular, this automatic generation is also based on the translation rules, so that the graphic interface is displayed in the specific technical language, which is thus personalized for the users U belonging to operating entity of the interlocking control system 2000. The graphic interface is also generated depending on the hardware configuration data, on the input data and on the logic unit and control program that the graphic interface is configured to interact through the communication means 2008.

The suite manager 1100 transmits the generated graphic interface to a graphic interface editor sub-module of the software editor module 1303. As a summary, the software editor module 1303 may have several sub-modules, some being dedicated to modifying and/or validating the logic unit and the control program, and the others being dedicated to modifying and/or validating the graphic interface.

The operator H may edit the layout of the generated graphic interface during step 8. He operator H validates the optionally edited graphic interface through the software editor module 1303.

The suite manager module 1100 then transmits the validated graphic interface to the software generator module 1203, by means of which the graphic interface is compiled during a sub-step 206, through a compiler of the software generator module 1203. Instead, an overall compilation of the two parts of software is executed during a common sub-step by one compiling sub-module of the software generator module 1203.

The compiled software may be retrieved by the operator H, for example by means of one of more storage drives, such as a USB flash drive or the like, for implementing the compiled software onto the hardware of the interlocking control system 2000, as soon as this system 2000 is physically built.

The steps of the method executed automatically by the modules 1200 are advantageously validated by one or more operators H by means of the modules 1300.

Each feature of the above-disclosed embodiments may be implemented in any of the above-disclosed embodiments, when technically possible.

## Claims

1. Method for designing an interlocking control system (2000), the interlocking control system being configured to be interfaced with interlocking equipment (3000) of a transportation network and comprising hardware (2001, 2002, 2004, 2007, 2008) and software executed by computing means (2003) of the hardware for controlling the interlocking equipment, the method comprising the successive steps of:
- (1) by means of a hardware designer module (1202), automatically designing the hardware, thereby generating hardware configuration data, the automatic designing being based on:
o predetermined designing rules specific for interlocking control systems, and
o input data specific to the transportation network for which the designed interlocking control system (2000) is intended to be interfaced with,
- (2) by means of a software generator module (1203), automatically generating the software executed on the computing means (2003) of the designed hardware, the generation of the software being based on:
o predetermined architecture rules specific for interlocking control systems,
o the hardware configuration data, and
o the input data,
**characterized in that** the method further comprises the steps of:
- (3) automatically providing the input data to the hardware designer module (1202) by means of a suite manager module (1100), and
- (4) automatically providing the input data and the hardware configuration data to the software generator module (1203) by means of the suite manager module.

2. Method according to claim 1, wherein the input data is relative to at least one of the following elements of the transportation network: the interlocking equipment (3000), operational rules, layout of tracks.

3. Method according any one of the previous claims, wherein :
- the method comprises, prior to the step (1) of automatically designing the hardware (2001, 2002, 2004, 2007, 2008), a step (5) of automatically translating specific data into the input data to be provided to the hardware designer module (1202) and to the software generator module (1203), the step (5) of automatically translating being executed by means of a data translator module (1201),
- the specific data is provided by a first operator (H) during a further step (11) of the method, in a specific technical language interpretable by the first operator, and being specific to the transportation network for which the interlocking control system (2000) is intended to be interfaced with, and
- the input data is in a generic language interpretable by the hardware designer module and by the software generator module.

4. Method according to claim 3, wherein the method further comprises, prior to the step (1) of automatically designing the hardware (2001, 2002, 2004, 2007, 2008) and after the step (5) of automatically translating, a step (6) of modifying and/or validating the translated input data, this further step (6) being executed by the first operator (H) through an input data editor module (1301).

5. Method according to any one of claims 3 or 4, wherein the step (5) of automatically translating is executed by the data translator module (1201), based on translation rules provided by the first operator (H) during a further step (10) of the method, the translation rules being specific to the transportation network for which the control system is intended to be interfaced with.

6. Method according to any one of the previous claims, wherein:
- the designed hardware (2001, 2002, 2004, 2007, 2008) comprises:
o at least one control unit (2001, 2002), for controlling the interlocking equipment (3000), the control unit comprising at least a part of the computing means (2003),
o a communication network (2004) for interfacing the control unit with the interlocking equipment (3000), and
o a human-machine interface (2007) for enabling one or more users (U) to control the interlocking equipment by means of the control unit.

7. Method according to claim 6, wherein the software executed by the computing means (2003) comprises a control program and a logic unit configured to be executed in combination with each other for sending control signals to the interlocking equipment (3000) and for receiving feedback signals from the interlocking equipment, by means of the communication network (2004).

8. Method according to claim 7, wherein the step (2) of automatically generating the software comprises the sub-steps of:
- (202) automatically generating a list of Boolean variables depending on the hardware configuration data,
- (203) automatically generating the logic unit depending on the list of Boolean variables, on the input data and on the architecture rules, and
- (204) automatically generating the control program depending on the hardware configuration data, on the input data and on the architecture rules.

9. Method according to claim 5, combined with any one of claims 6 to 8, wherein :
- the step (4) of automatically providing the input data and the hardware configuration data to the software generator module (1203) comprises a sub-step (401) of, by means of the suite manager module (1100), automatically providing the translation rules to the software generator module (1203), and
- the step (2) of generating the software executed on the computing means (2003) comprises a sub-step (201) of automatically generating a graphic interface to be displayed on at least one monitor (2009) of the human-machine interface (2007), the graphic interface being configured to display state of the interlocking equipment (3000) to the user in the specific technical language, the automatic generation of the graphic interface being based on the predetermined architecture rules, the hardware configuration data, the input data and the translation rules.

10. Method according to any one of the previous claims, wherein the method further comprises a step (8) of modifying and/or validating the software generated by the software generator module (1203), this step (8) being executed by a second operator (H) through a software editor module (1303).

11. Method according to any one of the previous claims, wherein the designing rules comprise a library of available hardware units that may be used for designing the hardware implemented in interlocking control systems, the step (1) of automatically designing the hardware (2001, 2002, 2004, 2007, 2008) comprising the following sub-steps:
- (101) automatically generating a list of hardware units required for the designed hardware based on the input data and on the available hardware units of the library, and
- (102) automatically determining allocations, for the hardware units of the list, in the interlocking control system (2000) being designed.

12. Method according to any one of the previous claims, wherein the method further comprises a step (9) of modifying and/or validating the hardware configuration data generated by the hardware designer module (1202), this step being executed by a third operator (H) through a hardware editor module (1302), prior to the step (3) of automatically providing the hardware configuration data to the software generator module (1203).

13. Method according to claim 11 combined with claim 12, wherein the step (9) of modifying and/or validating the hardware configuration data comprises a sub-step (901) of providing the third operator (H) with the list of hardware units and data related to the determined allocations, so that the third operator may modify and/or validate the hardware configuration data by means of the hardware editor module (1302).

14. Designing system (1000), for designing an interlocking control system (2000), the interlocking control system being configured to be interfaced with interlocking equipment (3000) of a transportation network and comprising hardware (2001, 2002, 2004, 2007, 2008) and software executed by computing means (2003) of the hardware for controlling the interlocking equipment, the designing system comprising:
- a hardware designer module (1202) configured to automatically design the hardware, thereby generating hardware configuration data, the automatic designing being based on:
o predetermined designing rules specific for interlocking control systems, and
o input data specific to the transportation network for which the designed interlocking control system (2000) is intended to be interfaced with,
- a software generator module (1203) configured to automatically generate the software executed on the computing means of the designed hardware, the generation of the software being based on:
o predetermined architecture rules specific for interlocking control systems,
o the hardware configuration data, and
o the input data,
**characterized in that** the designing system further comprises a suite manager module (1100) configured to automatically provide the input data to the hardware designer module (1202), and to automatically provide the input data and the hardware configuration data to the software generator module (1203).
